# FASCICULE DE BREVET EUROPEEN

(11) **EP 1 791 708 B1**
(45) Date de publication et mention de la délivrance du brevet: **18.03.2009**
(21) Numéro de dépôt: 05805606.0
(22) Date de dépôt: 06.09.2005
(51) Int. Cl.: B60J 5/10

(54) **VEHICULE EQUIPE AVEC CAPOT DE RECOUVREMENT D'ESPACE ARRIERE DE RANGEMENT EN DEUX PARTIES**
FAHRZEUG, DAS MIT EINER HAUBE AUSGERÜSTET IST, DIE EINEN ZWEITEILIGEN HINTEREN STAURAUM DECKT
VEHICLE EQUIPPED WITH A HOOD COVERING A TWO-PART REAR STORAGE SPACE

(30) Priorité: 20.09.2004 FR 0409934
(43) Date de publication de la demande: 06.06.2007
(73) Titulaire: Heuliez, 79142 Cerizay Cedex (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2005/002214
(87) Numéro de publication internationale: WO 2006/032748

(56) Documents cités:
- EP-A- 0 989 009
- EP-A- 1 170 160
- EP-A- 1 457 373
- FR-A- 2 849 807

## Description

Sous un aspect notable est ici concerné le caractère modulable ou transformable de certains équipements automobiles, en l'espèce un capot prévu pour être monté articulé par dessus un espace de rangement d'un véhicule, pour en autoriser ou en interdire l'accès.

Dans EP-A-989 009, est divulgué un véhicule transformable selon le préambule de la revendication 1 ci-après.

En particulier, un but visé est de proposer des véhicules transformables permettant, en fonction de la configuration du capot en cause de pouvoir configurer d'une manière ou d'une autre le véhicule.

Un autre but peut être celui d'un accès total ou partiel à l'intérieur de l'espace de rangement sélectivement recouvert par le capot concerné et/ou les conditions dans lesquelles on souhaite utiliser cet espace de rangement, par exemple pour loger des bagages dans une première configuration, pour y loger un toit mobile par rapport au bâti structurel du véhicule dans une autre configuration, ou encore pour placer ce toit mobile au dessus du capot en cause.

C'est dans ce contexte qu'un premier aspect de l'invention concerne un véhicule tel que précité qui possède les caractéristiques de la revendication 1 ci-après.

Avantageusement, le capot auxiliaire sera verrouillable vis à vis du capot principal en position rabattue contre ce dernier véhicule présentera en outre tout ou partie des caractéristiques des revendications suivantes.

Au titre des avantages on notera, suivant les caractéristiques :
- une séparation entre le capot auxiliaire et le capot principal, permettant de rendre en permanence accessible l'espace de rangement arrière, qui pourra alors définir une plate-forme de chargement ouverte à l'air libre,
- une possible transformation en pick-up ou par exemple en véhicule découvrable (cabriolet, coupé ...),
- l'obtention d'un creux susceptible de définir une plate-forme arrière de pick-up ou d'un volume éventuellement plus profond, propre à définir un coffre susceptible de recevoir un toit de véhicule découvrable.
- un retrait du capot auxiliaire à l'écart du capot principal et plus généralement du véhicule, permettant ainsi d'accéder à la configuration pick-up, le replacement du capot auxiliaire sur le capot principal permettant de revenir à une configuration telle qu'un cabriolet, un coupé ou une berline.

D'autres caractéristiques et avantages apparaîtront encore de la description détaillée qui suit faite en référence aux dessins annexés dans lesquels :
- la figure 1 est une vue schématique en coupe longitudinale (axe X) d'un véhicule,
- la figure 2 est une vue en perspective partielle du véhicule de la figure 1 et la figure 3 en est une variante,
- la figure 4 est une vue de dessus, partielle, de la figure 1,
- la figure 5 correspond à la coupe V-V de la figure 4 et la figure 6 à la coupe VI-VI de la figure 5,
- la figure 7 correspond à une coupe axiale partielle, suivant x, comme la figure 1,
- et les figures 8 à 12 montrent des étapes opératoires.

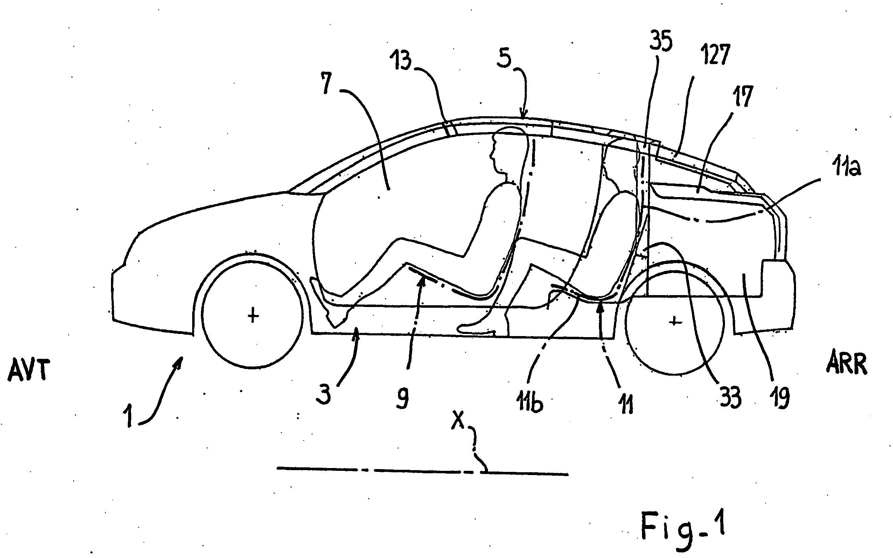

Figure 1, on voit un véhicule 1 comprenant un bâti structurel 3 définissant, en partie haute, un toit 5 qui, avec une zone environnante du bâti structurel 3 (lequel comprend le châssis, les portières, longerons, traverses, ...), définit l'habitacle intérieur 7.

Cet habitacle 7 accueille au moins quatre places assises réparties par exemple par paires en deux rangées de sièges, respectivement avant 9 et arrière 11.

L'habitacle 7 est donc recouvert par le toit 5 qui s'étend longitudinalement (suivant l'axe longitudinal X du véhicule) entre la traverse supérieure 13. du pare-brise et, à l'arrière, la vitre arrière (ou lunette arrière) 15 dressée globalement transversalement à l'axe longitudinal X.

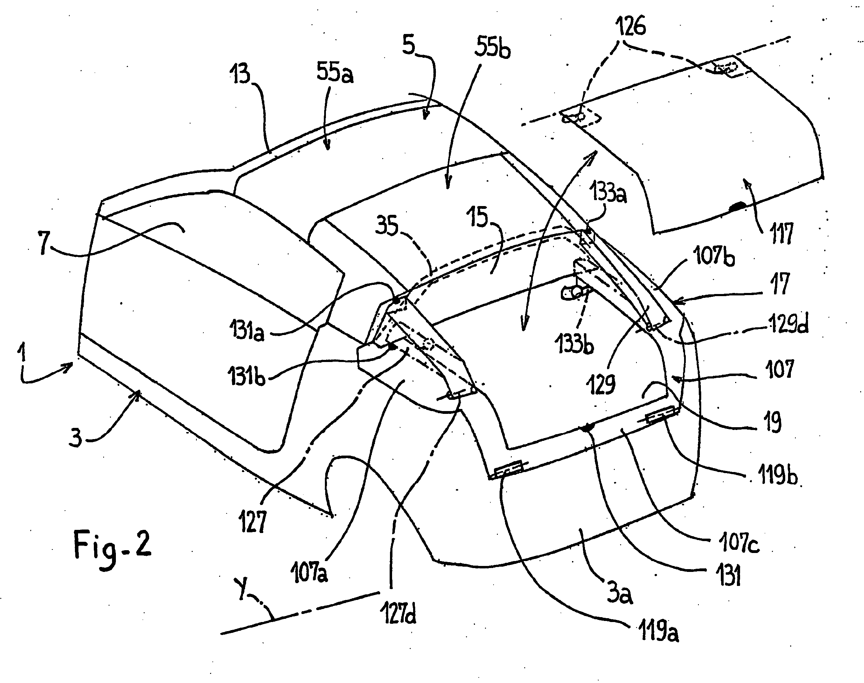

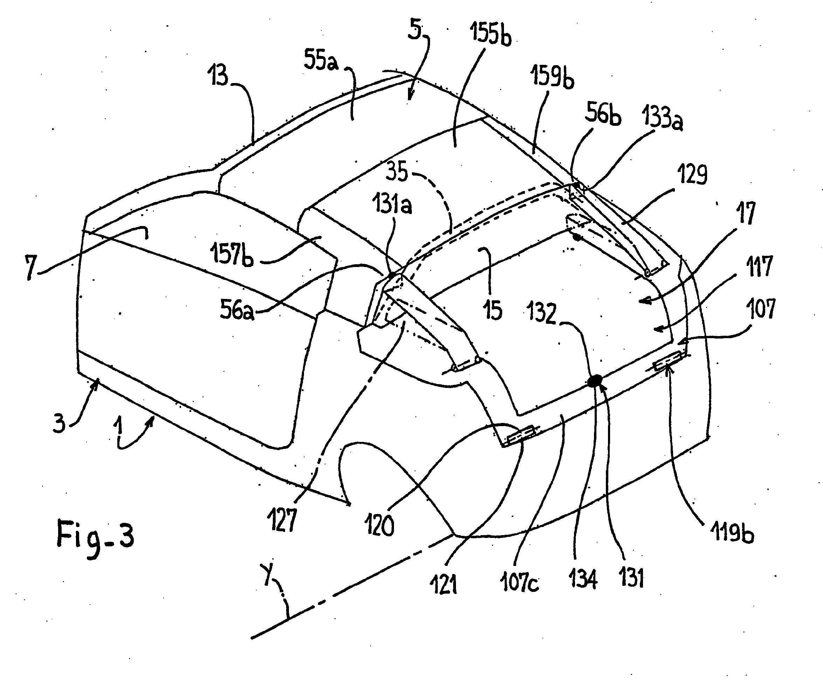

Cette limite arrière définit également, et sensiblement, l'avant d'un ensemble de capot mobile 17 adapté pour recouvrir ou libérer l'accès à une zone de rangement arrière 19 qui pourra être considérée, en particulier, soit comme une plate-forme de pick-up (figure 2) soit comme un coffre arrière (figure 3).

L'ensemble de capot 17 comprend un capot principal 107 et un capot auxiliaire 117, plus petit en longueur et largeur.

Les deux capots sont mobiles, le capot auxiliaire 117 par rapport au capot principal 107 et ce dernier par rapport au bâti structurel 3, de manière à pouvoir les ouvrir, ou les fermer, l'un sans l'autre et même pouvoir retirer le capot auxiliaire 117, dans la configuration pick-up de la figure 2.

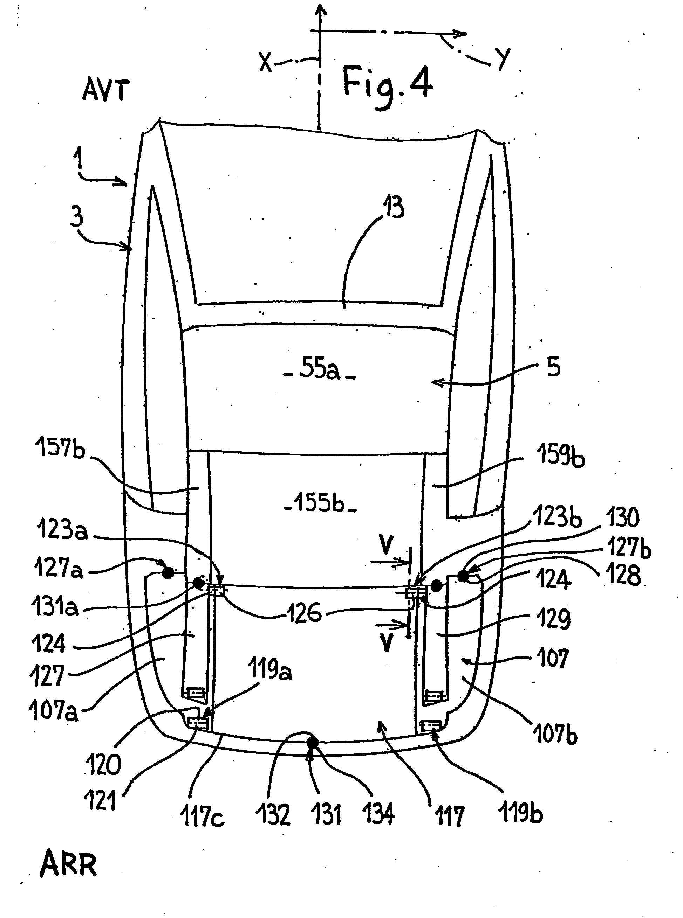

Pour cela, et comme on le détaille mieux figure 4, où les ronds schématisent des moyens de verrouillage et les rectangles des pivots, on trouve, avec une symétrie par rapport à l'axe X :
- des pivots transversaux arrière 119a,119b comprenant chacun des éléments de pivotement 120 et des éléments complémentaires de pivotement 121 liés respectivement au capot principal 107 et au bâti structurel 3, en partie transversale 3a basse de cette caisse 3, juste au-dessus du bouclier arrière, pour le pivotement du capot 107 par rapport audit bâti;
- des pivots transversaux avant 123a,123b comprenant chacun des premiers éléments de pivotement 124 et des seconds éléments complémentaires de pivotement 126 liés respectivement au capot principal 107 et au capot auxiliaire 117 pour le pivotement (y compris si on le souhaite jusqu'au retrait par dégondage) du capot auxiliaire 117 par rapport au capot principal;
- des verrous latéraux avant 127a,127b pour le verrouillage libérable du capot principal par rapport au bâti structurel, lorsque le premier est rabattu par dessus, contre le second. Ces verrous comprennent chacun des premiers éléments mobiles de verrouillage (tels qu'un pêne) 128, montés mobiles sur par exemple le capot principal et des seconds éléments complémentaires fixes de verrouillage 130 (tels qu'une gâche) fixés alors au bâti structurel 3;
- et un verrou arrière 131 pour le verrouillage libérable du capot auxiliaire 117 par rapport au capot principal 107, lorsque le premier est rabattu par dessus, contre le second. Ce verrou, ici central, comprend des premiers éléments mobiles de verrouillage 132, par exemple mobile sur le capot auxiliaire et des seconds éléments complémentaires de verrouillage 134 fixés alors au capot principal.

On comprendra les termes « avant » et « arrière » en référence aux extrémités avant (AVT) et arrière (ARR) du véhicule et on notera que les axes de pivotement des pivots précités sont ici parallèles à l'axe Y du véhicule et donc perpendiculaires à son axe longitudinal X.

Ainsi, le capot principal 107 s'ouvre (ici uniquement) en basculant vers l'arrière du véhicule et le capot auxiliaire vers l'avant, bien entendu ceci dans l'état déverrouillé (libéré) des éléments de verrouillage précités.

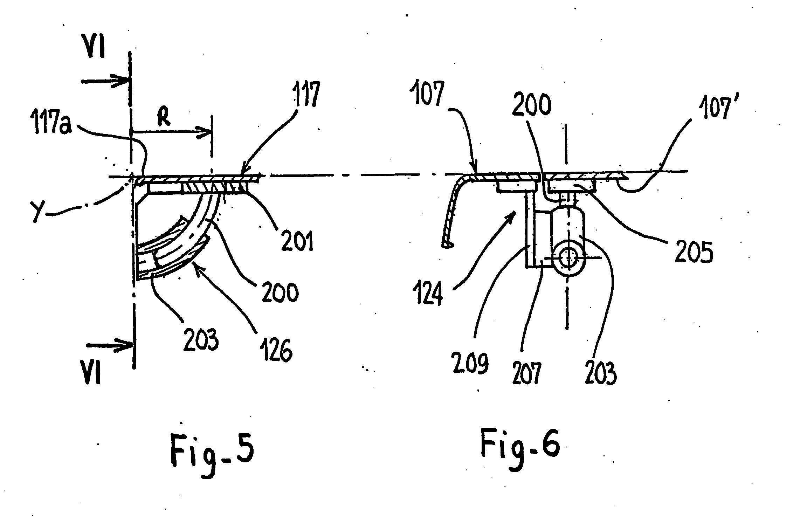

Quant aux moyens de charnières dégondables définis par lesdits éléments de pivotement 124,126 des pivots transversaux avant 123a,123b, ils autorisent donc le pivotement jusqu'à dégondage, c'est-à-dire jusqu'à séparation à cet endroit entre le capot auxiliaire 117 et le capot principal 107. Pour ce démontage rapide, les figures 5 et 6 montrent l'articulation entre le capot auxiliaire 117 et le capot principal 107 réalisé sous forme de charnières démontables/dégondables.

Sur la figure 5 une tige courbée 200 est fixée par l'intermédiaire d'une plaquette 201 sur une surface intérieure du capot auxiliaire 117, ceci au voisinage du bord avant 117a du capot auxiliaire. La tige courbée présente un rayon de courbure R qui est centré vers le bord avant du capot auxiliaire. Le capot principal 107 que l'on voit en coupe sur la figure 6 possède lui un tube courbé 203 de forme complémentaire à la tige courbée et suivant le même rayon que cette tige. Le tube courbé est fixé au capot principal par l'intermédiaire d'une plaquette 205 fixée sur une surface intérieure 107' du capot, la plaquette étant reliée au tube par deux éléments de liaison 207,209 ayant des formes de plaques. En position de fonctionnement lors de l'ouverture et de la fermeture du capot auxiliaire, la tige coudée 200 coulisse en étant guidée dans le tube complémentaire 203. Pour retirer le capot auxiliaire 117 il suffit de le faire pivoter d'un angle tel que la tige sorte du tube de guidage: le capot auxiliaire est alors désolidarisé du capot principal 107 et peut ainsi être retiré du véhicule. En fonctionnement normal un système de butée (non représenté) permet de limiter l'angle de pivotement afin de ne pas dégonder le capot de façon involontaire. Le dispositif représenté n'est évidemment pas limitatif des modes de réalisation: à titre d'exemple la tige courbée peut-être remplacée par un profilé plat courbé. De même, le tube courbé peut-être remplacé par des galets dont les axes de rotation sont parallèles à l'axe de pivotement du capot auxiliaire et qui sont disposés de façon à guider la tige courbée suivant son rayon de courbure.

Figure 4, on constate encore que le capot principal borde donc le capot auxiliaire 117, ici sur trois côtés, dès lors que le capot 107 présente une forme générale de U avec deux parties latérales 117a,117b globalement parallèles à l'axe X (capot fermé) et une partie transversale 117c reliant les deux parties latérales, à l'arrière, à proximité donc du bouclier arrière 125. Les deux capots 107, 117 s'ouvrent et se ferment donc ici par basculement autour d'axes parallèles à l'axe Y, à contresens l'un de l'autre.

A l'endroit de ces deux parties latérales 117a,117b du capot principal, situées de part et d'autre du capot auxiliaire, deux barreaux 127, 129 sont liés à ce capot principal et s'étendent le long de ces parties latérales, essentiellement suivant deux directions parallèles entre elles.

Ces deux barreaux sont avantageusement montés pivotants, vers une extrémité arrière, autour de deux axes coaxiaux, respectivement 127a, 129a, sensiblement parallèles à l'axe de pivotement défini par les éléments de pivotement du capot principal par rapport au bâti structurel 3 appartenant donc ici auxdits pivots transversaux arrière 119a,119b.

Ainsi, ces barreaux, ou arceaux car ils peuvent être de forme courbe, incurvés vers le bas, sont pivotants par rapport au capot principal, pour pivoter entre une position inclinée par rapport à ce capot 107 et une position rabattue contre lui, le long de ses parties latérales 117a,117b.

Pour maintenir ces deux positions, chaque barreau latéral et, en regard, le capot principal pour la position rabattue et l'arrière du toit 5 pour la position inclinée, sont équipés de moyens complémentaires de verrouillage, respectivement 131a,131b ; 133a,133b, pour verrouiller ces barreaux latéraux dans les deux positions précitées.

Comme pour les systèmes de verrouillage déjà présentés, ces moyens complémentaires de verrouillage libérable pourront comprendre d'un côté un pêne mobile sur par exemple chaque barreau et des gâches fixées alors au capot principal pour la position rabattue et à l'arrière du toit 5 pour la position inclinée.

C'est pour cela que qu'en 56a,56b, le toit 5 se prolonge sensiblement dans sa continuité longitudinale axiale, par deux excroissances latérales équipées des gâches 133b.

Favorablement, dans leur position inclinée, basculée vers le haut, les barreaux latéraux viendront sensiblement dans la continuité du profil du toit, lorsque celui-ci est disposé au dessus de l'habitacle 7.

Concernant ce toit 5, on prévoit qu'il s'agira a priori d'un toit mobile entre une première position dans laquelle il recouvre au moins en partie l'habitacle 7 et une deuxième position dans laquelle l'habitacle est au moins en partie dégagé, le toit étant alors situé à l'écart du dessus de l'habitacle. Favorablement, il s'agira même d'un toit articulé vis-à-vis du bâti 3, même si un toit retirable (par complète séparation avec le bâti 3 et donc le véhicule) est envisageable, par exemple un « hard top ».

Par ailleurs, ce toit 5 est ici un toit rigide, même si une capote souple articulée est envisageable. Il s'agit en particulier d'un toit comprenant au moins deux parties 55a,55b, respectivement une partie avant 55a et une partie arrière 55b située derrière la partie avant au moins dans ladite première position du toit au-dessus de l'habitacle 7, ces parties avant et arrière étant articulées l'une par rapport à l'autre autour d'un premier pivot 57 s'étendant sensiblement perpendiculairement à l'axe longitudinal X du véhicule, la partie arrière étant en outre articulée par rapport au bâti structurel 3 du véhicule autour d'un second pivot 59 s'étendant sensiblement perpendiculairement audit axe longitudinal X du véhicule, de manière que le passage du toit de sa première à sa seconde position inclut un pliage desdites parties avant et arrière du toit l'une vers l'autre.

La partie arrière 55b comprend même ici une partie centrale arrière 155b et deux parties latérales arrière 157b,159b (voir figures 2 et 3) montées autour d'un axe de pivotement transversal, entre les positions déployée au-dessus de l'habitacle et pliée à l'endroit de l'espace arrière 19.

Qu'il s'agisse d'une version « pick-up », ou transformable ainsi à partir par exemple d'un cabriolet ou d'un coupé, comme sur la figure 1, ou d'une version découvrable comme sur la figure 3, l'espace arrière de rangement (ou de chargement) 19 est situé en contre-bas du sommet de la vitre arrière 15 et, ici, du toit 5 alors dans son état de recouvrement de l'habitacle 7.

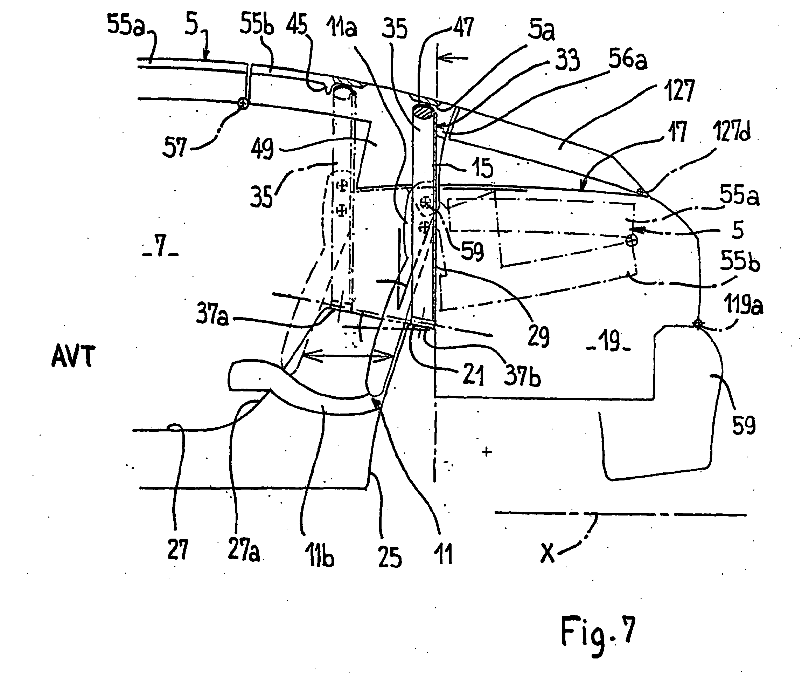

On notera que la vitre 15 pourra, comme ici, être mécaniquement ou fonctionnellement indépendante du toit 5 et être liée directement ou non au bâti 3 par rapport auquel elle peut être montée coulissante parallèlement à l'axe X, entre une position arrière illustrée fig. 7 en trait plein et une position en traits mixtes, plus avancée augmentant d'autant la dimension axiale de l'espace arrière 19. Pour cela, la vitre ou lunette arrière 15 pourra être fixée à une armature 35 qui se dresse jusqu'au-dessus de la limite des dossiers 11a de sièges 11 situés en limite arrière de l'habitacle et qui descend jusqu'au niveau de glissières ou rails 21, lesquels s'étendent sensiblement suivant X. L'armature 35 coulisse le long d'eux, tout en pouvant être verrouillée au moins dans deux positions limitant plus ou moins la longueur axiale de l'habitacle. A cette armature est fixée une cloison 29 prolongée au-dessus par la vitre supérieure 15 qui définissent ensemble une structure 33 de séparation entre l'habitacle 7 et l'espace arrière de rangement 19.

L'armature 35 peut en particulier consister en un arceau de sécurité s'étendant sur la largeur du véhicule et dont on voit une forme possible de réalisation sur les figures 2 et 3 (forme globalement en U dressé).

Figure 2, où le capot auxiliaire 117 a été retiré, par dégondage vis-à-vis du capot principal 107, l'espace 19 définit une plate-forme arrière à l'air libre, ouverte sur le dessus et l'arrière. Les barreaux latéraux 127,129 sont relevés et verrouillés aux excroissances latérales 56a,56b du toit. Le capot principal 107 est fermé, verrouillé au bâti 3.

Sur la figure 3, les deux capots 107, 117 sont montés sur le véhicule 1, en position rabattue et verrouillée.

Dans ce cas, l'espace arrière 19 de rangement (ou de chargement) est un coffre que ferment le capot principal 107 et le capot auxiliaire 117 et les dimensions relatives de ce coffre arrière et du toit 5 sont adaptées pour que le toit puisse être rangé dans le coffre arrière dans sa seconde position, dans la version ici envisagée, et privilégiée, d'un véhicule transformable et spécifiquement découvrable par repliement du toit dans le coffre arrière 19.

A partir d'un état habitacle 7 recouvert (par exemple dans le cas d'un coupé quatre places, pour passer à un état pick-up quatre places, comme sur la figure 2, il suffit de déverrouiller le capot auxiliaire 117 par rapport au capot principal 107, c'est-à-dire libérer les uns des autres les moyens de verrouillage 131 ; 132, 134 et de procéder de même pour les moyens libérables de pivotement avant 123a, 123b ; capot 117 retiré, comme sur la figure 1, la plate-forme arrière 19 apparaît alors pleinement accessible et l'on peut par exemple fixer des barres transversales, ou directement un objet tel qu'un vélo, aux barreaux latéraux 127, 129 alors verrouillés à l'arrière du toit 5, en position dressée.

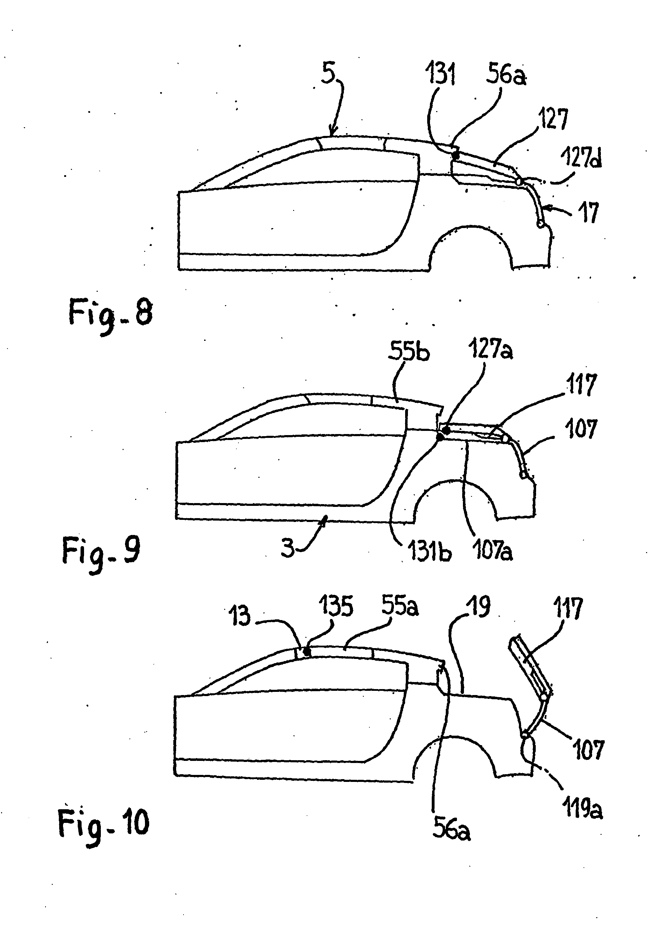

A partir du même état de la figure 8, toit recouvrant au moins partiellement l'habitacle 7, on peut également transformer le véhicule en véhicule découvert (cabriolet).

Si le toit 5 est un toit articulé au bâti 3 du véhicule, on procède comme suit, dans l'hypothèse par exemple où, comme ici, ce toit comprend les parties de toit déjà cités 55a, 155b, 157b et 159b.

On déverrouille d'abord en particulier les moyens de verrouillage libérables repérés 135 notamment sur la figure 10 et prévus pour partie sur la partie de toit avant 55a et pour partie sur la traverse supérieure 13 de baie de pare-brise.

On s'assure également que les barreaux latéraux 127, 129 sont en position basse comme sur la figure 5; sinon on les déverrouille vis-à-vis de l'arrière du toit, tels qu'en 56a sur la figure 8, puis on les verrouille en position rabattue sur les parties latérales 107a, 107b du capot principal 107 en agissant sur les moyens de verrouillage précités tels que 131b sur la figure 9.

On peut alors déverrouiller les moyens de verrouillage avant tels que 127a sur cette même figure 9, permettant de libérer le capot principal 107 par rapport au bâti structurel 3.

Ce capot peut ainsi s'ouvrir, ici en basculant vers l'arrière autour donc de ses moyens de pivotement arrière tels que 119a, figure 10.

S'il est monté sur le capot principal, le capot auxiliaire 117 (alors verrouillé à lui) pivote en même temps que le capot principal.

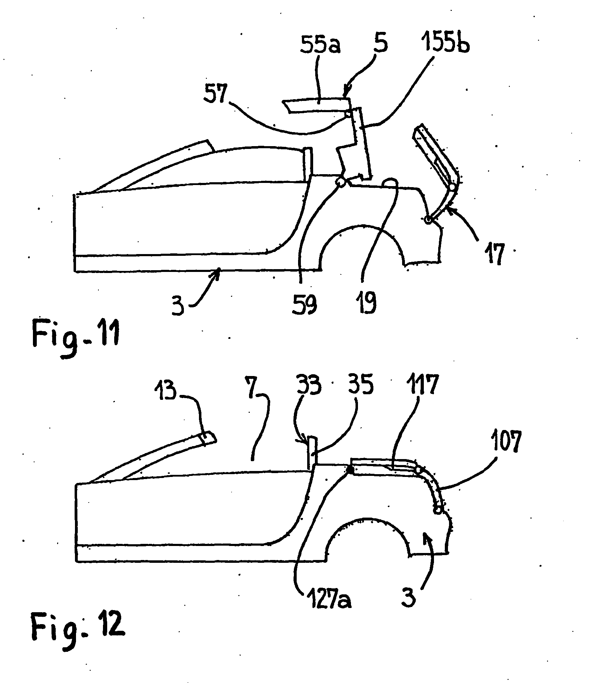

Figure 11, on voit que l'on peut alors commander (en particulier par toute commande automatique et motorisée connue) le toit 5 de manière à le ranger à l'intérieur du coffre arrière 19.

Dans la réalisation illustrée, la partie avant 55a du toit s'articule alors vis-à-vis de la partie arrière centrale 155b, autour du premier pivot 57 et cette même partie centrale arrière pivote elle-même par rapport au bâti structurel 3 autour du second pivot transversal arrière 59.

Parallèlement, les parties latérales arrière 157b, 159b ont elles-même pivoté autour de leur axe transversal.

En position rangée du toit, les parties latérales arrière 157b, 159b sont basculées vers l'arrière et les parties avant et centrales arrière 55a, 155b sont rabattues l'une au-dessus de l'autre, sensiblement horizontalement.

On peut alors refermer les capots 107, 117, par basculement vers l'avant, comme on le voit sur la figure 12, où le capot auxiliaire 117 est toujours fermé et verrouillé, tandis que l'on vient de verrouiller à l'avant, en position rabattue, le capot principal 107, par action sur ses moyens de verrouillage tels que 127a.

L'habitacle 7 est alors entièrement découvert, sur le dessus et l'on voit, sur la figure 12, en limite arrière de celui-ci la structure de séparation 33, avec ici l'arceau transversal 35 porteur de la vitre arrière 15 qui forme bien une lunette arrière indépendante des mouvements du toit 5.

Avantageusement, si l'on a prévu les glissières 21 déjà cités, l'ouverture et la fermeture du toit 5 comme présenté ci-avant pour un toit articulé vis-à-vis du bâti structurel 3, pourra s'effectuer tant en position de la structure de séparation 33 coulissée vers l'arrière le long des glissières 21 qu'en position coulissée vers l'avant, alors que les dossiers 11a des sièges arrière 11 concernés imposent à ces sièges une profondeur d'assise réduite.

## Revendications

1. Véhicule transformable présentant un avant (AVT), un arrière (ARR) et comprenant un habitacle (7) avec des sièges pour les occupants du véhicule, un espace arrière de rangement (19) situé derrière l'habitacle (7), et un dispositif de recouvrement de cet espace arrière (19) de rangement comprenant un capot principal (107) de recouvrement de l'espace de rangement qui comprend des éléments de pivotement (120) adaptés pour coopérer avec d'autres éléments de pivotement (121) fixés à un bâti structurel (3) du véhicule pour permettre un pivotement de ce capot principal par rapport audit bâti structurel (3), lorsque le capot principal est monté sur ce bâti structurel, de sorte que le capot principal s'ouvre alors de l'avant vers l'arrière du véhicule, **caractérisé en ce que** le capot principal borde, au moins localement, un capot auxiliaire (117) qui s'étend sensiblement en partie centrale du capot principal et est monté articulé par rapport à lui par l'intermédiaire de premiers éléments de pivotement (126) coopérant avec des seconds éléments complémentaires de pivotement (124) fixés au capot principal.

2. Véhicule selon la revendication 1, **caractérisé en ce que** le capot principal (107) s'ouvre uniquement de l'avant vers l'arrière du véhicule en pivotant uniquement autour de pivots transversaux arrière (119a,119b) situés donc vers l'arrière du véhicule et auxquels appartiennent lesdits éléments et autres éléments de pivotement (120,121).

3. Véhicule selon la revendication 2, **caractérisé en ce qu'**il comprend un bouclier arrière et les pivots transversaux arrière (119a,119b) sont situés à l'endroit d'une partie transversale (3a) basse dé caisse, juste au-dessus du bouclier arrière.

4. véhicule selon l'une quelconque des revendications précédentes, **caractérisé en ce que** le capot auxiliaire (117) comprend des premiers éléments de verrouillage (131) coopérant de manière libérable avec des seconds éléments de verrouillage (134) prévus sur le capot principal (107), de manière à assurer un verrouillage libérable entre le capot principal et le capot auxiliaire lorsque ce dernier est rabattu contre le capot principal.

5. Véhicule selon l'une quelconque des revendications précédentes, **caractérisé en ce que** les premiers éléments (126) de pivotement du capot auxiliaire (117) et les seconds éléments complémentaires (124) de pivotement du capot principal (107), pour le pivotement relatif entre le capot auxiliaire et le capot principal, définissent ensemble des moyens de démontage rapide (123a,123b), de préférence des moyens de charnières dégondables, autorisant une séparation à cet endroit entre le capot auxiliaire et le capot principal.

6. Véhicule selon l'une quelconque des revendications précédentes, **caractérisé en ce qu'**à l'endroit de deux parties latérales (107a,107b) du capot principal (107) situées de part et d'autre du capot auxiliaire (117), deux barreaux (127,129) sont liés à ce capot principal et s'étendent le long de ces parties latérales, essentiellement suivant deux direction parallèles entre elles et sensiblement perpendiculaires à l'axe de pivotement défini par lesdits éléments de pivotement (120) du capot principal par rapport au bâti structurel (3) du véhicule.

7. Véhicule selon la revendication 6, **caractérisé en ce que** lesdits barreaux latéraux (127,129) sont pivotants, vers une extrémité, par rapport au capot principal (107), pour pivoter entre une position inclinée par rapport à ce capot principal et une position rabattue contre le capot principal, le long de ses parties latérales (107a,107b).

8. Véhicule selon la revendication 6 ou la revendication 7, **caractérisé en ce que** lesdits barreaux latéraux et le capot principal (107) sont équipés de moyens complémentaires de verrouillage (131b) pour verrouiller ces barreaux latéraux dans au moins une position déterminée.

9. Véhicule selon la revendication 5, **caractérisé en ce que,** pour rendre transformable le véhicule:
- ledit espace (19) de rangement arrière est situé en contre-bas d'une vitre arrière (15) disposée à l'arrière de l'habitacle (7), transversalement à un axe longitudinal (X) du véhicule,
- le capot principal (107) et le bâti structurel (3)du véhicule comprennent des troisièmes et quatrième éléments complémentaires de verrouillage (127a,127b), pour verrouiller le capot principal vis-à-vis dudit bâti structurel, dans une position du capot principal rabattue contre le bâti structurel,
- dans cette position rabattue, et dans un état dans lequel les premiers et seconds éléments complémentaires (131,132,134) de verrouillage entre le capot auxiliaire et le capot principal sont déverrouillés, tandis que lesdits premiers et seconds éléments de pivotement (124,126) entre le capot auxiliaire (117) et le capot principal (107) sont dans leur état de démontage relatif, un retrait du capot auxiliaire à l'écart du véhicule est autorisé, permettant ainsi de passer de l'une des configurations du véhicule parmi un cabriolet, un coupé et une berline à une configuration de pick-up.

10. Véhicule transformable selon l'une quelconque des revendications précédentes, **caractérisé en ce que :**
- lesdits éléments et autres éléments de pivotement (120,121), situés à l'arrière du véhicule, transversalement à son axe longitudinal (X), assure une ouverture exclusive du capot principal par basculement de l'avant vers l'arrière du véhicule,
- le véhicule comprend un toit (5,55) mobile entre une première position dans laquelle il recouvre au moins en partie l'habitacle (7) et une deuxième position dans laquelle l'habitacle est au moins en partie dégagé, le toit étant alors situé à l'écart du dessus de l'habitacle qu'il recouvrait dans la première position,
- l'espace arrière de rangement (19) est un coffre que ferment le capot-principal (107) et le capot auxiliaire (117), chacun en position rabattu,
- et les dimensions relative de ce coffre arrière et du toit sont adaptées pour que le toit puisse être ragé dans le coffre arrière dans sa seconde position.

11. Véhiculé selon la revendication 10 **caractérisé en ce que** le toit est rigide et comprend au moins une partie avant (55a) de toit et une partie arrière (55b) de toit située derrière la partie avant, au moins dans ladite première position du toit au-dessus de l'habitacle (7), ces parties avant et arrière étant articulées l'une par rapport à l'autre autour d'un premier pivot (57) s'étendant sensiblement perpendiculairement à l'axe longitudinal (X) du véhicule, la partie arrière étant en outre articulée par rapport au bâti structurel (3) du véhicule autour d'un second pivot (59) s'étendant sensiblement perpendiculairement audit axe longitudinale (X) du véhicule, de manière que le passage du toit de sa première à sa seconde position inclut un pliage desdites parties avant et arrière du toit l'une vers l'autre.

12. Véhicule selon la revendication 9 ou l'une des revendications 10 et 11 rattachée à cette revendication 9, **caractérisé en ce que** ladite vitre arrière transversale (15) est liée à la structure (3) du véhicule et est mécaniquement indépendante du toit (5,55) dont est équipé le véhicule.

13. Véhicule selon l'une quelconque des revendications 10 à 12 rattachée à la revendication 6, **caractérisé en ce que** dans leur position inclinée, basculé vers le haut, les barreaux latéraux (127,129) viennent sensiblement dans la continuité du profil du toit (5,55) dont est équipé le véhicule, lorsque celui-ci est disposé au dessus de l'habitacle (7).

## Claims

1. Convertible vehicle having a front (AVT), a rear (ARR) and comprising a passenger compartment (7) with seats for the occupants of the vehicle, a rear storage space (19) situated behind the passenger compartment (7), and a device for covering this rear storage space (19) comprising a main cover (107) for the storage space which comprises pivoting elements (120) suitable for interacting with other pivoting elements (121) attached to a structural frame (3) of the vehicle to allow this main cover to pivot relative to the said structural frame (3), when the main cover is mounted on this structural frame, so that the main cover then opens from the front to the rear of the vehicle, **characterized in that** the main cover edges, at least locally, an auxiliary cover (117) which extends substantially in the central portion of the main cover and is mounted articulated relative to it by means of first pivoting elements (126) interacting with second complementary pivoting elements (124) attached to the main cover.

2. Vehicle according to Claim 1, **characterized in that** the main cover (107) opens only from the front to the rear of the vehicle by pivoting only about rear transverse pivots (119a, 119b) therefore situated towards the rear of the vehicle and to which the said and other pivoting elements (120, 121) belong.

3. Vehicle according to Claim 2, **characterized in that** it comprises a rear bumper panel and the rear transverse pivots (119a, 119b) are situated in the location of a bottom transverse portion (3a) of body, just above the rear bumper panel.

4. Vehicle according to any one of the preceding claims, **characterized in that** the auxiliary cover (117) comprises first locking elements (131) interacting in a releasable manner with second locking elements (134) provided on the main cover (107) so as to provide a releasable locking between the main cover and the auxiliary cover when the latter is folded against the main cover.

5. Vehicle according to any one of the preceding claims, **characterized in that** the first pivoting elements (126) of the auxiliary cover (117) and the second complementary pivoting elements (124) of the main cover (107), for the relative pivoting between the auxiliary cover and the main cover, define together rapid removal means (123a, 123b), preferably unhingeable hinge means, allowing a separation in this location between the auxiliary cover and the main cover.

6. Vehicle according to any one of the preceding claims, **characterized in that,** in the location of two side portions (107a, 107b) of the main cover (107) situated on either side of the auxiliary cover (117), two bars (127, 129) are connected to this main cover and extend along these lateral portions, essentially in two directions parallel with one another and substantially perpendicular to the pivoting axis defined by the said pivoting elements (120) of the main cover relative to the structural frame (3) of the vehicle.

7. Vehicle according to Claim 6, **characterized in that** the said lateral bars (127, 129) are pivoting, towards one end, relative to the main cover (107), in order to pivot between a position that is inclined relative to this main cover and a position folded against the main cover, along its lateral portions (107a, 107b).

8. Vehicle according to Claim 6 or Claim 7, **characterized in that** the said lateral bars and the main cover (107) are fitted with complementary locking means (131b) in order to lock these lateral bars in at least one determined position.

9. Vehicle according to Claim 5, **characterized in that,** to make the vehicle convertible:
- the said rear storage space (19) is situated below a rear window (15) placed at the rear of the passenger compartment (7), transversely to a longitudinal axis (X) of the vehicle,
- the main cover (107) and the structural frame (3) of the vehicle comprise third and fourth complementary locking elements (127a, 127b) in order to lock the main cover relative to the said structural frame, in a position in which the main cover is folded against the structural frame,
- in this folded position, and in a state in which the first and second complementary locking elements (131, 132, 134) between the auxiliary cover and the main cover are unlocked, while the said first and second pivoting elements (124, 126) between the auxiliary cover (117) and the main cover (107) are in their relative removed state, a removal of the auxiliary cover away from the vehicle is allowed, thereby making it possible to switch from one of the vehicle configurations amongst a cabriolet, a coupé and a saloon to a pick-up configuration.

10. Convertible vehicle according to any one of the preceding claims, **characterized in that:**
- the said and other pivoting elements (120, 121) situated at the rear of the vehicle, transversely to its longitudinal axis (X), provide an exclusive opening of the main cover by tilting from the front towards the rear of the vehicle,
- the vehicle comprises a roof (5, 55) that can be moved between a first position in which it covers at least partly the passenger compartment (7) and a second position in which the passenger compartment is at least partly uncovered, the roof then being situated separate from the top of the passenger compartment that it covered in the first position,
- the rear storage space (19) is a boot which the main cover (107) and the auxiliary cover (117) close, each in the folded position,
- and the relative dimensions of this rear boot and of the roof are adapted so that the roof can be stored in the rear boot in its second position.

11. Vehicle according to Claim 10, **characterized in that** the roof is rigid and comprises at least one front portion (55a) of roof and one rear portion (55b) of roof situated behind the front portion, at least in the said first position of the roof above the passenger compartment (7), these front and rear portions being articulated relative to one another about a first pivot (57) extending substantially perpendicularly to the longitudinal axis (X) of the vehicle, the rear portion also being articulated relative to the structural frame (3) of the vehicle about a second pivot (59) extending substantially perpendicularly to the said longitudinal axis (X) of the vehicle, so that the passage of the roof from its first to its second position includes a folding of the said front and rear portions of the roof one towards the other.

12. Vehicle according to Claim 9 or one of Claims 10 and 11 attached to this Claim 9, **characterized in that** the said transverse rear window (15) is connected to the structure (3) of the vehicle and is mechanically independent from the roof (5, 55) with which the vehicle is fitted.

13. Vehicle according to any one of Claims 10 to 12 attached to Claim 6, **characterized in that** in their inclined position, tilted upwards, the lateral bars (127, 129) come substantially into the continuity of the profile of the roof (5, 55) with which the vehicle is fitted, when the latter is placed above the passenger compartment (7).

## Patentansprüche

1. Umwandelbares Fahrzeug mit einer Vorderseite (AVT), einer Heckseite (ARR) und mit einer Fahrgastzelle (7) mit Sitzen für die Insassen des Fahrzeugs, einem hinteren Stauraum (19), der hinter der Fahrgastzelle (7) angeordnet ist, und einer Abdeckeinrichtung für diesen hinteren Stauraum (19) mit einem Hauptdeckel (107) zur Abdeckung des Stauraums, der Schwenkelemente (120) umfasst, die so ausgebildet sind, dass sie mit weiteren Schwenkelementen (121) zusammenwirken, die an einem Karosserierahmen (3) des Fahrzeugs befestigt sind, um eine Schwenkung dieses Hauptdeckels in Bezug zu dem Karosserierahmen (3) zu ermöglichen, wenn der Hauptdeckel auf diesem Karosserierahmen montiert ist, so dass sich der Hauptdeckel von der Vorderseite zur Heckseite des Fahrzeugs öffnet, **dadurch gekennzeichnet, dass** der Hauptdeckel wenigstens lokal einen Zusatzdeckel (117) einfasst, der sich im Wesentlichen im Zentralbereich des Hauptdeckels erstreckt und in Bezug zu diesem mittels ersten Schwenkelementen (126) gelenkig montiert ist, die mit zweiten komplementären Schwenkelementen (124) zusammenwirken, die an dem Hauptdeckel befestigt sind.

2. Fahrzeug nach Anspruch 1, **dadurch gekennzeichnet, dass** sich der Hauptdeckel (107) nur von der Vorderseite zur Heckseite des Fahrzeugs unter Schwenkung nur um heckseitige Querzapfen (119a, 119b) öffnet, die folglich in Richtung Heckseite des Fahrzeugs angeordnet sind und zu denen die Schwenkelemente und weitere Schwenkelemente (120, 121) gehören.

3. Fahrzeug nach Anspruch 2, **dadurch gekennzeichnet, dass** dieses ein Heckschild umfasst und die heckseitigen Querzapfen (119a, 119b) gegenüber eines tiefliegenden Querbereichs (3a) der Karosserie, genau über dem heckseitigen Schild, angeordnet sind.

4. Fahrzeug nach einem der vorhergehenden Ansprüche, **dadurch gekennzeichnet, dass** der Zusatzdeckel (117) erste Verriegelungselemente (131) umfasst, die in lösbarer Weise mit zweiten Verriegelungselementen (134) zusammenwirken, die auf dem Hauptdeckel (107) vorgesehen sind, um so eine lösbare Verriegelung zwischen dem Hauptdeckel und dem Zusatzdeckel sicherzustellen, wenn letzterer gegen den Hauptdeckel umgeschlagen wird.

5. Fahrzeug nach einem der vorhergehenden Ansprüche, **dadurch gekennzeichnet, dass** die ersten Schwenkelemente (126) des Zusatzdeckels (117) und die zweiten komplementären Schwenkelemente (124) des Hauptdeckels (107) für die Relativschwenkung zwischen dem Zusatzdeckel und dem Hauptdeckel zusammen eine Schnelllöseeinrichtung (123a, 123b) bilden, vorzugsweise aus aushängbaren Scharnieren, die eine Trennung an dieser Stelle zwischen dem Zusatzdeckel und dem Hauptdeckel zulassen.

6. Fahrzeug nach einem der vorhergehenden Ansprüche, **dadurch gekennzeichnet, dass** an der Stelle von zwei Seitenbereichen (107a, 107b) des Hauptdeckels (107), die beidseitig des Zusatzdeckels (117) liegen, zwei Stäbe (127, 129) mit diesem Hauptdeckel verbunden sind und sich entlang dieser Seitenbereiche erstrecken; im Wesentlichen in zwei parallelen Richtungen zueinander und im Wesentlichen senkrecht zu der durch die Schwenkelemente (120) des Hauptdeckels gebildeten Schwenkachse im Bezug zum Karosserierahmen (3) des Fahrzeugs.

7. Fahrzeug nach Anspruch 6, **dadurch gekennzeichnet, dass** die Seitenstäbe (127, 129) schwenkbar in Richtung eines Endes in Bezug zum Hauptdeckel (107) sind, um zwischen einer schrägen Position in Bezug zu diesem Hauptdeckel und einer gegen den Hauptdeckel umgeschlagenen Position, entlang seiner Seitenbereiche (107a, 107b) zu schwenken.

8. Fahrzeug nach Anspruch 6 oder Anspruch 7, **dadurch gekennzeichnet, dass** die Seitenstäbe und der Hauptdeckel (107) mit komplementären Verriegelungselementen (131b) ausgestattet sind, um diese Seitenstäbe in wenigstens einer bestimmten Position zu verriegeln.

9. Fahrzeug nach Anspruch 5, **dadurch gekennzeichnet, dass,** um das Fahrzeug umwandelbar zu machen:
- der hintere Stauraum (19) unterhalb einer Heckscheibe (15) angeordnet ist, die an der Heckseite der Fahrgastzelle (7), quer zu einer Längsachse (X) des Fahrzeugs angeordnet ist,
- der Hauptdeckel (7) und der Karosserierahmen (3) des Fahrzeugs dritte und vierte komplementäre Verriegelungselemente (127a, 127b) umfassen, um den Hauptdeckel gegenüber dem Karosserierahmen in einer gegen den Karosserierahmen angeschlagenen Position des Hauptdeckels zu verriegeln,
- in dieser Anschlagposition und in einem Zustand, in welchem die ersten und zweiten komplementären Verriegelungselemente (131, 132, 134) zwischen dem Zusatzdeckel und dem Hauptdeckel verriegelt sind, während sich die ersten und zweiten Schwenkelemente (124, 126) zwischen dem Zusatzdeckel (117) und dem Hauptdeckel (107) in ihrem relativen Demontagezustand befinden, ein Zurückziehen des Zusatzdeckels, weg vom Fahrzeug zugelassen ist, wodurch ermöglicht wird, von einer der Konfigurationen des Fahrzeugs als Cabriolet, Coupé und Limousine in eine Konfiguration eines Pick-ups zu gelangen.

10. Umwandelbares Fahrzeug nach einem der vorhergehenden Ansprüche, **dadurch gekennzeichnet, dass:**
- die Schwenkelemente und weitere Schwenkelemente (120, 121), die an der Heckseite des Fahrzeugs quer zu seiner Längsachse (X) angeordnet sind, eine exklusive Öffnung des Hauptdeckels durch Kippen von der Vorderseite zur Heckseite des Fahrzeugs gewährleisten,
- das Fahrzeug ein Dach (5, 55) umfasst, das zwischen einer ersten Position, in welcher dieses wenigstens einen Teil der Fahrgastzelle (7) abdeckt, und einer zweiten Position, in welcher die Fahrgastzelle wenigstens teilweise freigelegt ist, beweglich ist, wobei das Dach dann in Abstand zur Oberseite der Fahrgastzelle liegt, die es in der ersten Position abdecken würde,
- der heckseitige Stauraum (19) ein Kofferraum ist, den der Hauptdeckel (107) und der Zusatzdeckel (117) schließen, jeweils in angeschlagener Position,
- und die relativen Abmessungen dieses heckseitigen Kofferraums und des Daches so ausgelegt sind, dass das Dach in seiner zweiten Position in dem heckseitigen Kofferraum verstaut sein könnte.

11. Fahrzeug nach Anspruch 10, **dadurch gekennzeichnet, dass** das Dach steif ist und wenigstens einen vorderen Bereich (55a) des Dachs und einen heckseitigen Bereich (55b) des Daches, der wenigstens in der ersten Position des Daches oberhalb der Fahrgastzelle (7) hinter dem vorderen Bereich liegt, umfasst, wobei diese vorderen und hinteren Bereiche um einen ersten Drehzapfen (57) gelenkig miteinander verbunden sind, der sich im Wesentlichen senkrecht zur Längsachse (X) des Fahrzeugs erstreckt, wobei der hintere Bereich zudem gelenkig in Bezug zu dem Karosserierahmen (3) des Fahrzeugs um einen zweiten Drehzapfen (59) verbunden ist, der sich im Wesentlichen senkrecht zu der Längsachse (X) des Fahrzeugs erstreckt, derart, dass der Durchgang des Daches aus seiner ersten in seine zweite Position eine Faltung der vorderen und hinteren Bereiche des Daches zueinander umfasst.

12. Fahrzeug nach Anspruch 9 oder einem der Ansprüche 10 und 11, rückbezogen auf diesen Anspruch 9, **dadurch gekennzeichnet, dass** das quer verlaufende Heckfenster (15) mit der Karosserie (3) des Fahrzeugs verbunden ist und mechanisch unabhängig vom Dach (5, 55) ist, mit dem das Fahrzeug ausgestattet ist.

13. Fahrzeug nach einem der Ansprüche 10 bis 12, rückbezogen auf Anspruch 6, **dadurch gekennzeichnet, dass** die Seitenstäbe (127, 129) in ihrer nach oben geschwenkten, schrägen Position im Wesentlichen in Fortsetzung des Profils des Daches (5, 55) gelangen, mit dem das Fahrzeug ausgestattet ist, wenn dieses über der Fahrgastzelle (7) angeordnet ist.
